# EUROPÄISCHE PATENTSCHRIFT

(11) **EP 2 212 529 B1**
(45) Veröffentlichungstag und Bekanntmachung des Hinweises auf die Patenterteilung: **09.11.2011**
(21) Anmeldenummer: 08804321.1
(22) Anmeldetag: 17.09.2008
(51) Int. Cl.: F01N 3/20

(54) **TANK ZUR BEVORRATUNG EINES REDUKTIONSMITTELS**
TANK FOR STORING A REDUCING AGENT
CUVE POUR STOCKER UN AGENT DE RÉDUCTION

(30) Priorität: 18.10.2007 DE 102007050272
(43) Veröffentlichungstag der Anmeldung: 04.08.2010
(73) Patentinhaber: Robert Bosch GmbH, 70442 Stuttgart (DE)
(72) Erfinder: BALBOA, Antonio, 70597 Stuttgart (DE); WALZ, Christian, 76448 Durmersheim (DE); BAYER, Markus, 71665 Vaihingen/Enz (DE)
(86) Internationale Anmeldenummer: PCT/EP2008/062370
(87) Internationale Veröffentlichungsnummer: WO 2009/053176

(56) Entgegenhaltungen:
- EP-A- 1 662 103
- EP-A- 1 731 882
- WO-A-00/21881

## Beschreibung

### Stand der Technik

Ein aussichtsreiches Verfahren für die Minderung von Stickoxiden in sauerstoffreichen Abgasen stellt die selektive katalytische Reduktion dar. Dieses Verfahren hat sich in der jüngeren Vergangenheit zur Minderung des Stickoxidgehalts in den sauerstoffreichen Abgasen von Kraftwerken bewährt. Bei der klassischen Variante wird gasförmiges Ammoniak als Reduktionsmittel in den Abgasstrom eingebracht und mit den Stickoxiden selektiv zu Stickstoff und Wasser umgesetzt. Für die vorgesehene Anwendung des Verfahrens im Fahrzeugbereich gilt es kompakte Systeme zum Einsatz zu bringen. Bei der Verwendung von wässriger Harnstofflösung ("AdBlue") muss bei mobilen Anwendungen ein entsprechender Reduktionsmittelvorrat mitgeführt werden. Die eutektische Temperatur im Stoffsystem Harnstoff/Wasser liegt bei rund -11,5°C. Um den Anforderungen an die Wintertauglichkeit eines Betriebsstoffs im Kraftfahrzeug zu entsprechen, ist deshalb eine Zusatzheizung erforderlich. Bei durchgefrorenem Tank muss innerhalb einer bestimmten Zeit die Dosierbereitschaft des Systems gewährleistet werden, d.h. es muss eine ausreichend große Menge aufgetaut sein. Falls die aufgetaute Menge zu gering ist, kommt es zum Ansaugen von Luft aus dem Reduktionsmitteltank und das System funktioniert nicht mehr bzw. stellt sich ab. Durch das elektrische Bordnetz können für das Auftauen eines beispielsweise ca. 20-25 Liter fassenden Tankes maximal ca. 120 Watt an elektrischer Leistung zur Verfügung gestellt werden, was zum schnellen Auftauen eines kompletten Tanks nicht ausreicht.

Aus der DE 10 2006 027 487 ist es bekannt, einen Reduktionsmitteltank mit einem Schwapptopf und zwei Ansaugleitungen auszustatten.

Aus der EP 1 731 882 ist es bekannt, einen Reduktionsmitteltank mit Kühlwasser einer Brennkraftmaschine zu beheizen.

### Offenbarung der Erfindung

Der erfindungsgemäße Tank mit den kennzeichnenden Merkmalen des unabhängigen Anspruchs hat demgegenüber den Vorteil, mittels einer geeignet angeordneten Heizvorrichtung stets und auch bei niedrigen Tankfüllständen eine ausreichende Menge an AdBlue bzw. Reduktionsmittel auftauen zu können. Die thermische Kopplung der Rücklaufleitung mit der Heizvorrichtung gewährleistet diese positive Beeinflussung des Auftauverhaltens auch bei Verwendung eines einfach aufgebauten hydraulischen Systems und erhöht darüber hinaus die Betriebssicherheit des Tanks.

Besonders vorteilhaft ist es hierbei, eine Auslassöffnung der Rücklaufleitung in geeigneter Weise anzuordnen, so dass bereits heraus gepumptes Reduktionsmittel zumindest teilweise genau in den Bereich zurückgeführt werden kann, aus dem es abgesaugt wird; dies unterstützt ein schnelles Auftauverhalten genau in dem Bereich, aus dem abgesaugt werden soll.

Durch die in den abhängigen Ansprüchen aufgeführten Maßnahmen sind vorteilhafte Weiterbildungen und Verbesserungen des im unabhängigen Anspruch angegebenen Tanks möglich.

Weitere Vorteile ergeben sich durch die in der Beschreibung genannten Merkmale.

### Kurze Beschreibung der Zeichnungen

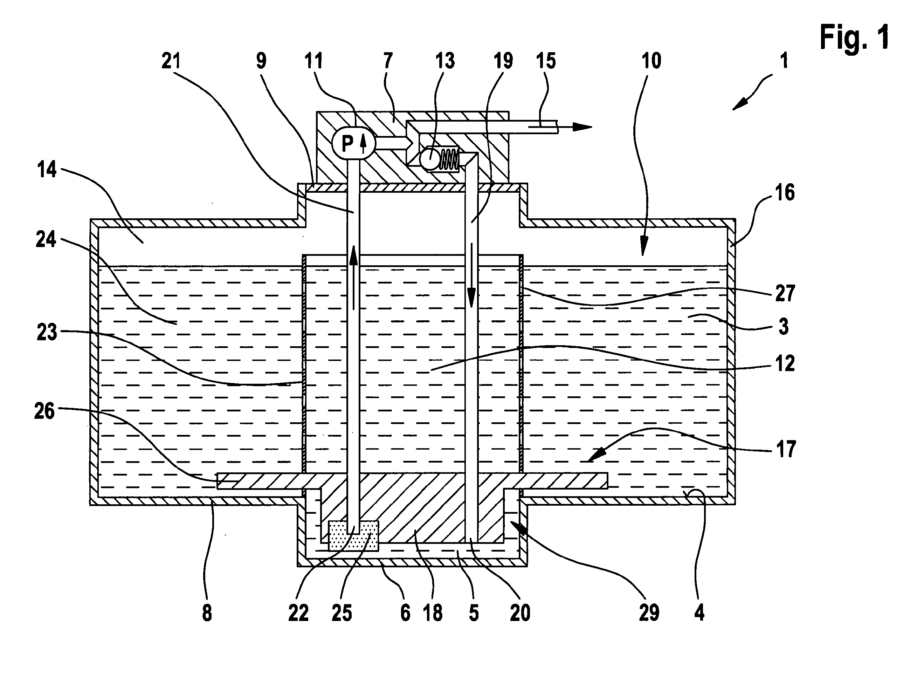

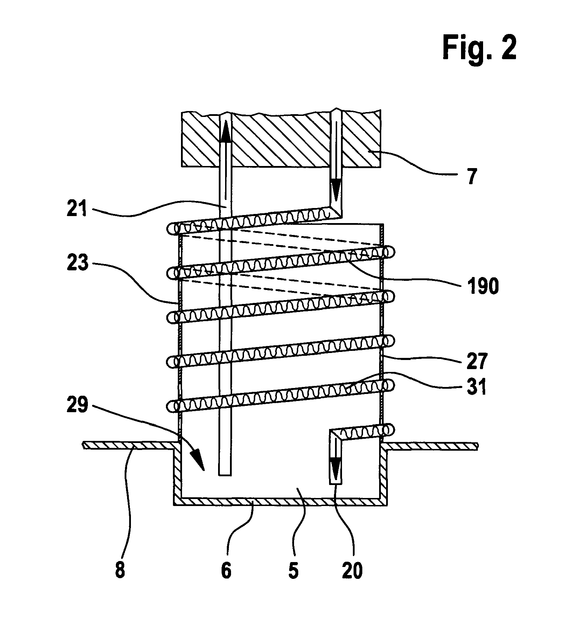

Ausführungsbeispiele der Erfindung sind in der Zeichnung dargestellt und in der nachfolgenden Beschreibung näher erläutert. Es zeigen Figur 1 einen Tank mit offenem Schwapptopf und Figur 2 ein Detail einer alternativen Tankanordnung.

### Ausführungsformen der Erfindung

Figur 1 zeigt einen Tank 1 mit einem Behälter 3, der zur Bevorratung eines Reduktionsmittels, insbesondere einer wässrigen Harnstofflösung, in einem Kraftfahrzeug dient. Im Inneren des Behälters 3 ist ein als hohler Körper 23 ausgebildeter Schwapptopf angeordnet. Der Schwapptopf teilt den Innenraum 10 des Tankbehälters in einen inneren Bereich 12 und in einen äußeren Bereich 14 auf, wobei der innere Bereich 12 vom hohlen Körper umgeben ist und der äußere Bereich 14 zwischen der Außenseite des Schwapptopfs und der Wandung 16 des Tankbehälters angesiedelt ist. Der Schwapptopf 23 weist Durchbrüche 27 auf, so dass ein sich im Tank befindliches Reduktionsmittel 24 vom äußeren in den inneren Bereich strömen kann und umgekehrt. Auf der dem Boden 4 zugewandten Seite des Schwapptopfs 23 ist an ihm ein Heizkörper 18 einer Heizvorrichtung 17 befestigt. Der Heizkörper 18 ragt hierbei in einen sogenannten Sumpf 5 hinein, der von einem Teilbereich 6 des Bodens 4 auf der Unterseite des Tanks begrenzt wird, der im Vergleich zu den übrigen Bereichen 8 des Tankbodens vertieft ist. Eine Ansaugleitung 21 führt vom Sumpf 5 aus nach oben zu einer in einem sogenannten Fördermodul 7 eingebauten Pumpe 11. Auf der dem Sumpf 5 zugewandten Seite ist die Ansaugleitung 21 durch den Heizkörper 18 geführt und mündet mit ihrem ansaugseitigen Leitungsende 22 in einem Filter 25, das in das im Sumpf befindliche Reduktionsmittel eintaucht. Von der Pumpe 11 führt auslassseitig eine Leitung 15 zu einem nicht näher dargestellten Dosierventil bzw. Dosiermodul zur Einspritzung des Reduktionsmittels in den Abgastrakt. Von der Leitung 15 zweigt über ein Rückschlagventil 13 eine zum Innenraum 10 des Tanks zurückführende Rücklaufleitung 19 ab, die, ähnlich wie die Ansaugleitung 21, durch den Heizkörper 18 geführt ist und mit ihrer Auslassöffnung 20 im Bereich des Sumpfs 5 endet. Das Fördermodul 7 mit Pumpe 11 und Rückschlagventil 13 ist auf der Oberseite des Tanks auf einem Tankdeckel 9 befestigt, der wiederum sowohl den Tank 1 auf dessen Oberseite als auch den Schwapptopf auf seiner dem Heizkörper 18 abgewandten Seite abschließt.

Um zu vermeiden, dass der Sumpf 5 trocken fällt, wird mittels einer beheizten Rücklaufleitung 19 in dem Sumpf dafür gesorgt, dass der Rücklauf von der Pumpe 11 auf direktem Weg zurück zur Saugstelle geführt wird. Um sich im äußeren Bereich 14 bzw. im Haupttank befindliche wässrige Harnstofflösung (AdBlue) immer auftauen zu können, sind im Schwapptopf 23 die Durchbrüche 27 vorgesehen, die neben einem Austausch von Reduktionsmittel zwischen innerem Bereich 12 und äußerem Bereich 14 auch eine Übertragung von Wärmeenergie vom inneren Bereich in den Haupttank ermöglichen. Der Schwapptopf bzw. der mit Durchbrüchen versehene hohle Körper 23 dient zum Unterdrücken zu starker Schwappbewegungen, ohne den Flüssigkeitsaustausch zwischen innerem Bereich 12 und Haupttank 14 zu behindern, so dass stets flüssiges Reduktionsmittel aus dem Haupttank 14 in den Sumpf 5, in dem sich die Ansaugstelle 22 befindet, nachlaufen kann. Hierdurch reicht es auch aus, nur eine Saugleitung vorzusehen, die direkt aus dem Sumpf des Tanks ansaugt. Dementsprechend ist der Schwapptopf 23 auf seiner dem Sumpf 5 zugewandten Seite offen; der Heizkörper 18 der Heizvorrichtung, der sich im Sumpf befindet, beheizt insbesondere das dem Sumpf zugewandte Ende des Schwapptopfes dort, wo Ansaugleitung 21 und Rücklaufleitung 19 enden. Die direkt in den Sumpf zurückführende und mittels der Heizvorrichtung 17 beheizte Rücklaufleitung gewährleistet bei laufendem Pumpenbetrieb stets eine Bespülung des Sumpfbereiches mit warmem Reduktionsmittel, so dass ein rasches Auftauen im Bereich der Ansaugstelle 22 zusätzlich unterstützt wird. Der Heizkörper 18 der Heizvorrichtung 17 weist in den Haupttank bzw. äußeren Bereich 14 hineinragende Fortsätze 26 auf, um auch ein rasches Auftauen etwaig eingefrorener Flüssigkeitsbereiche außerhalb des Schwapptopfes zu unterstützen. Der Durchmesser des Sumpfes 5 bzw. des Teilbereichs 6 des Tankbodens beträgt ca. 10cm; hierdurch wird vermieden, dass durch Schwappbewegungen bei niedrigen Tankfüllständen Luft in den Bereich der Ansaugstelle gelangt. Die Ansaugstelle bzw. das ansaugseitige Leitungsende 22 weist ein Filter auf, das austauschbar angebracht ist. Bei ausreichender Dimensionierung dieses Filters kann ein weiteres, nicht näher dargestelltes Filterelement bzw. Feinfilter vor bzw. hinter der Pumpe 11 entfallen, was zur Einsparung von Bauraum beiträgt.

Alternativ kann die Rücklaufleitung zusätzlich zum oder anstelle des Heizkörpers 18 mittels eines um die Rücklaufleitung gewickelten bzw. in die Rücklaufleitung integrierten Heizdrahtes entlang seiner gesamten länglichen Erstreckung beheizt werden.

Der Tank weist vorzugsweise auch eine nicht näher dargestellte reversibel verschließbare Befüllungsöffnung bzw. (ein) Be-/ und/oder Entlüftungsventil(e) zur Gewährleistung eines Druckausgleichs auf.

Figur 2 zeigt einen Ausschnitt eines Tanks mit einer alternativen Schwapptopf-Ausführung. Sumpf 5 und Fördermodul 7 kommunizieren ebenfalls über eine Ansaugleitung 21 und eine Rücklaufleitung zurück in den Sumpf, die Rücklaufleitung 190 ist jedoch spiralförmig ausgebildet und umgibt den mit Durchbrüchen versehenen hohlen Körper 23 auf seiner dem Haupttank zugewandten, also äußeren Seite in Spiralform, sich vom Fördermodul 7 nach unten windend, um schließlich mit ihrer Auslassöffnung 20 in den durch den Sumpf 5 gebildeten unteren Bereich 29 zu gelangen. Die Rücklaufleitung 190 weist ein integriertes Heizelement 31 auf, das sowohl die Rücklaufleitung 190 als auch sich im äußeren Bereich 14 bzw. im Haupttank befindliches Reduktionsmittel beheizt. Die Heizleistung verteilt sich dabei ungefähr gleichmäßig auf einer zylinderförmigen Oberfläche, die sich vom Fördermodul bis nach unten in den Bereich des Sumpfes erstreckt.

In einer alternativen Ausführungsform kann die spiralförmige Rücklaufleitung auch auf der Innenseite des Schwapptopfes angeordnet sein bzw. teilweise innen wie außen angeordnet sein und über die Durchbrüche des Schwapptopfes jeweils von außen nach innen bzw. umgekehrt spiralförmig nach unten zum Sumpf geführt werden. In einer weiteren alternativen Ausführungsform kann auch eine zusätzliche Heizung als Bestandteil der Heizvorrichtung des Tanks vorgesehen werden, die beispielsweise auf der Außenseite des Schwapptopfes oder aber an der Wand des Haupttankes befestigt ist.

## Patentansprüche

1. Tank zur Bevorratung eines Reduktionsmittels, insbesondere eines flüssigen Reduktionsmittels, mit dem Stickoxide aus Abgasen von Brennkraftmaschinen zu Stickstoff und Wasser reduziert werden können, mit Mitteln (11, 21) zum Ansaugen des Reduktionsmittels aus einem Behälter (3) des Tanks und mit einer Rücklaufleitung (19,190) zur zumindest teilweisen Rückführung angesaugten Reduktionsmittels in den Behälter, **dadurch gekennzeichnet, dass** die Rücklaufleitung (19,190) mittels einer Heizvorrichtung (18, 31) beheizt werden kann, wobei ein Innenraum (10) des Behälters mittels eines im Innenraum angeordneten hohlen Körpers (23) in einen inneren, vom hohlen Körper umschlossenen Bereich (12) und in einen äußeren Bereich (14) aufgeteilt ist, wobei die Mittel zum Ansaugen eine Ansaugleitung (21) umfassen und wobei die Ansaugleitung im inneren Bereich (12) angeordnet ist, und wobei die Ansaugleitung an ihrem ansaugseitigem Ende (22) mit einem Filter (25) verbunden ist, und das Filter (25) mit der Heizvorrichtung (18, 31) in wärmeleitendem Kontakt steht, wobei der Körper Durchbrüche (27) aufweist, so dass Reduktionsmittel vom äußeren Bereich (14) in den inneren Bereich (12) gelangen kann und umgekehrt, und wobei die Auslassöffnung (20) der Rücklaufleitung (19, 190) in dem inneren Bereich (12) angeordnet ist.

2. Tank nach Anspruch 1, **dadurch gekennzeichnet, dass** eine Auslassöffnung (20) der Rücklaufleitung (19,190) in einem unteren Bereich (29) des Tanks angeordnet ist.

3. Tank nach Anspruch 2, **dadurch gekennzeichnet, dass** der untere Bereich (29) des Tanks durch einen Teilbereich (6) eines Tankbodens (4) begrenzt ist, wobei der Teilbereich (6) gegenüber übrigen Bereichen (8) des Tankbodens vertieft ist.

4. Tank nach einem der vorhergehenden Ansprüche, **dadurch gekennzeichnet, dass** der Körper (23) eine Zylinderform aufweist.

5. Tank nach einem der vorhergehenden Ansprüche, **dadurch gekennzeichnet, dass** der Körper auf der unteren Seite offen ist.

6. Tank nach einem der Ansprüche 1 bis 4, **dadurch gekennzeichnet, dass** ein Heizkörper (18) der Heizvorrichtung an der unteren Seite des Körpers angeordnet und/oder befestigt ist.

7. Tank nach einem der vorhergehenden Ansprüche, **dadurch gekennzeichnet, dass** die Heizvorrichtung zur Beheizung von im äußeren Bereich (14) befindlichen Reduktionsmittel eingerichtet ist.

8. Tank nach einem der vorhergehenden Ansprüche, **dadurch gekennzeichnet, dass** zumindest ein Teil der Ansaugleitung (21) mit dem Heizkörper in wärmeleitendem Kontakt steht.

9. Tank nach einem der vorhergehenden Ansprüche, **dadurch gekennzeichnet, dass** die Rücklaufleitung (19) im inneren Bereich (12) angeordnet ist.

10. Tank nach einem der Ansprüche 1 bis 8, **dadurch gekennzeichnet, dass** die Rücklaufleitung (190) an der dem äußeren Bereich (14) zugewandten Seite des Körpers angeordnet ist.

11. Tank nach Anspruch 9 oder 10, **dadurch gekennzeichnet, dass** die Rücklaufleitung (19,190) spiralförmig gewickelt ist.

12. Tank nach einem der vorhergehenden Ansprüche, **dadurch gekennzeichnet, dass** ein Heizelement (31) der Heizvorrichtung entlang der Rücklaufleitung (19,190) angeordnet bzw. in die Rücklaufleitung (19,190) integriert ist.

13. Tank nach einem der vorhergehenden Ansprüche, **dadurch gekennzeichnet, dass** eine Pumpe (11) bzw. ein eine Pumpe enthaltendes Fördermodul (7) oberhalb des Tanks angeordnet ist.

14. Tank nach Anspruch 13, **dadurch gekennzeichnet, dass** die Pumpe (11) bzw. das Fördermodul (7) auf einem Tankdeckel (9) angeordnet ist.

15. Tank nach Anspruch 1 und 14, **dadurch gekennzeichnet, dass** der Tankdeckel (9) den hohlen Körper (23) oben abschließt.

## Claims

1. Tank for storing a reducing agent, in particular a liquid reducing agent, by means of which nitrogen oxides from exhaust gases of internal combustion engines can be reduced to form nitrogen and water, having suction means (11, 21.) for sucking the reducing agent out of a vessel (3) of the tank and having a return line (19, 190) for at least partially returning suctioned reducing agent into the vessel, **characterized in that** the return line (19, 190) can be heated by means of a heating device (18, 31), wherein an interior space (10) of the vessel is divided, by means of a hollow body (23) which is arranged in the interior space, into an inner region (12) surrounded by the hollow body and an outer region (14), wherein the suction means comprise a suction line (21) and wherein the suction line is arranged in the inner region (12), and wherein the suction line is connected at its suction-side end (22) to a filter (25), and the filter (25) is in heat-conducting contact with the heating device (18, 31), wherein the body has apertures (27) such that reducing agent can pass from the outer region (14) into the inner region (12) and vice versa, and wherein the outlet opening (20) of the return line (19, 190) is arranged in the inner region (12).

2. Tank according to Claim 1, **characterized in that** an outlet opening (20) of the return line (19, 190) is arranged in a lower region (29) of the tank.

3. Tank according to Claim 2, **characterized in that** the lower region (29) of the tank is delimited by a partial region (6) of a tank base (4), wherein the partial region (6) is deepened in reflation to other regions (8) of the tank base.

4. Tank according to one of the preceding claims, **characterized in that** the body (23) has a cylindrical shape.

5. Tank according to one of the preceding claims, **characterized in that** the body is open on the bottom side.

6. Tank according to one of Claims 1 to 4, **characterized in that** a heating body (18) of the heating device is arranged on and/or fastened to the bottom side of the body.

7. Tank according to one of the preceding claims, **characterized in that** the heating device is designed to heat reducing agent situated in the outer region (14).

8. Tank according to one of the preceding claims, **characterized in that** at least a part of the suction line (21) is in heat-conducting contact with the heating body.

9. Tank according to one of the preceding claims, **characterized in that** the return line (19) is arranged in the inner region (12).

10. Tank according to one of Claims 1 to 8, **characterized in that** the return line (190) is arranged on that side of the body which faces towards the outer region (14).

11. Tank according to Claim 9 or 10, **characterized in that** the return line (19, 190) is helically coiled.

12. Tank according to one of the preceding claims, **characterized in that** a heating element (31) of the heating device is arranged along the return line (19, 190) or is integrated into the return line (19, 190).

13. Tank according to one of the preceding claims, **characterized in that** a pump (11) or a delivery module (7) which contains a pump is arranged above the tank.

14. Tank according to Claim 13, **characterized in that** the pump (11) or the delivery module (7) is arranged on a tank cover (9).

15. Tank according to Claims 1 and 14, **characterized in that** the tank cover (9) closes off the hollow body (23) at the top.

## Revendications

1. Réservoir pour stocker un agent de réduction, en particulier un agent de réduction fluide, avec lequel des oxydes d'azote provenant de gaz d'échappement de moteurs à combustion interne peuvent être réduits en azote et en eau, comprenant des moyens (11, 21) pour aspirer l'agent de réduction hors d'un récipient (3) du réservoir et une conduite de retour (19, 190) pour recirculer au moins en partie l'agent de réduction aspiré dans le récipient, **caractérisé en ce que** la conduite de retour (19, 190) peut être chauffée au moyen d'un dispositif de chauffage (18, 31), un espace interne (10) du récipient étant divisé au moyen d'un corps creux (23) disposé dans l'espace interne en une région intérieure (12) entourée par le corps creux et en une région extérieure (14), les moyens d'aspiration comprenant une conduite d'aspiration (21) et la conduite d'aspiration étant disposée dans la région intérieure (12), et la conduite d'aspiration étant connectée à son extrémité (22) côté aspiration à un filtre (25), et le filtre (25) étant en contact de conduction thermique avec le dispositif de chauffage (18, 31), le corps présentant des orifices (27), de sorte que l'agent de réduction puisse parvenir depuis la région extérieure (14) dans la région intérieure (12) et inversement, et l'ouverture de sortie (20) de la conduite de retour (19, 190) étant disposée dans la région intérieure (12).

2. Réservoir selon la revendication 1, **caractérisé en ce qu'**une ouverture de sortie (20) de la conduite de retour (19, 190) est disposée dans une région inférieure (29) du réservoir.

3. Réservoir selon la revendication 2, **caractérisé en ce que** la région inférieure (29) du réservoir est limitée par une région partielle (6) d'un fond du réservoir (4), la région partielle (6) étant renfoncée par rapport aux autres régions (8) du fond du réservoir.

4. Réservoir selon l'une quelconque des revendications précédentes, **caractérisé en ce que** le corps (23) présente une forme cylindrique.

5. Réservoir selon l'une quelconque des revendications précédentes, **caractérisé en ce que** le corps est ouvert du côté inférieur.

6. Réservoir selon l'une quelconque des revendications 1 à 4, **caractérisé en ce qu'**un corps chauffant (18) du dispositif de chauffage est disposé et/ou fixé sur le côté inférieur du corps -

7. Réservoir selon l'une quelconque des revendications précédentes, **caractérisé en ce que** le dispositif de chauffage est prévu pour le chauffage d'agents de réduction se trouvant dans la région extérieure (14).

8. Réservoir selon l'une quelconque des revendications précédentes, **caractérisé en ce qu'**au moins une partie de la conduite d'aspiration (21) est en contact de conduction thermique avec le corps chauffant.

9. Réservoir selon l'une quelconque des revendications précédentes, **caractérisé en ce que** la conduite de retour (19) est disposée dans la région intérieure (12).

10. Réservoir selon l'une quelconque des revendications 1 à 8, **caractérisé en ce que** la conduite de retour (190) est disposée sur le côté du corps tourné vers la région extérieure (14).

11. Réservoir selon la revendication 9 ou 10, **caractérisé en ce que** la conduite de retour (19, 190) est enroulée en spirale.

12. Réservoir selon l'une quelconque des revendications précédentes, **caractérisé en ce qu'**un élément chauffant (31) du dispositif de chauffage est disposé le long de la conduite de retour (19, 190) ou est intégré dans la conduite de retour (19, 190).

13. Réservoir selon l'une quelconque des revendications précédentes, **caractérisé en ce qu'**une pompe (11) ou un module de refoulement (7) contenant une pompe est disposé(e) au-dessus du réservoir.

14. Réservoir selon la revendication 13, **caractérisé en ce que** la pompe (11) ou le module de refoulement (7) est disposé(e) sur un couvercle de réservoir (9).

15. Réservoir selon les revendications 1 et 14, **caractérisé en ce que** le couvercle de réservoir (9) ferme par le haut le corps creux (23).
